# EUROPEAN PATENT APPLICATION

(11) **EP 3 514 603 A1**
(43) Date of publication of application: **24.07.2019**
(21) Application number: 16916005.8
(22) Date of filing: 14.09.2016
(51) Int. Cl.: G02B 27/01

(54) **HEAD-MOUNTED ELECTRONIC DEVICE AND DISPLAY MODULE THEREOF**

(71) Applicant: Shenzhen Royole Technologies Co., Ltd, Shenzhen, Guangdong 518172 (CN)
(72) Inventor: YU, Linwei, Shenzhen Guangdong 518052 (CN); CHEN, Songya, Shenzhen Guangdong 518052 (CN)
(74) Representative: Mewburn Ellis LLP
(86) International application number: PCT/CN2016/099103
(87) International publication number: WO 2018/049620

(57) **Abstract**

A display unit (108) and a head-mounted display device (100) are provided by an embodiment of the present disclosure. The display unit (108) includes an optical unit (10) movable in a preset first direction (X), an image generation device (20) movably coupled to the optical unit (10) in a preset second direction (Y), a first adjusting unit (30), and a second adjusting unit (40). The first adjusting unit (30) includes a first operating member (32) and a locking mechanism (34) synchronizing with the optical unit (10) in the first direction (X). When the locking mechanism (34) is not subjected to an external force, the locking mechanism (34) is in a first state for locking a position of the optical unit (10), and when the locking mechanism (34) is subjected to the external force by the first operating member (32), the locking mechanism (34) is in a second state capable of driving the optical unit (10) to move in the first direction (X). The second adjusting unit (40) includes a transmission mechanism (42) synchronizing with the optical unit (10) in the first direction (X) and a second operating member (44) coupled to the image generation device (20) by the transmission mechanism (42). The second operating member (44) surrounds the first operating member (32) and makes the image generation device (20) move in the second direction (Y) when rotating the second operating member (44). Therefore, a user can adjust a pupil distance and a diopter without mutual interference.

## Description

### TECHNICAL FIELD

The present disclosure relates to a display unit of a head-mounted electronic device, and more particularly to a display unit capable of adjusting a diopter and a pupil distance.

### BACKGROUND

Currently, near-eye display devices, such as head-mounted displays (HMDs), are becoming more and more popular. The work principle of the HMDs is that an image displayed on an ultramicro display screen is enlarged by a set of precise optical lenses, and the image is projected into eyes, thus a wearer can view an enlarged virtual image, which is a similar way to take a magnifier to watch an object showing the enlarged virtual image. In order to adapt to pupil distances of different wearers, most of the current HMDs on the market can adjust the pupil distance, but few of the current HMDs on the market can adjust diopter for the wearers who are nearsighted or farsighted.

### SUMMARY

The present disclosure aims to provide a display unit and a head-mounted electronic device with the display unit, which can adjust a diopter and a pupil distance conveniently.

An exemplary embodiment of the present disclosure provides a display unit, including an optical unit, an image generation device, a first adjusting unit, and a second adjusting unit. The optical unit is movable in a preset first direction. The image generation device movably couples to the optical unit in a preset second direction. The first adjusting unit includes a first operating member and a locking mechanism synchronizing with the optical unit in the first direction. When the locking mechanism is not subjected to an external force, the locking mechanism is in a first state for locking a position of the optical unit; and when the locking mechanism is subjected to the external force by the first operating member, the locking mechanism is in a second state capable of driving the optical unit to move in the first direction. The second adjusting unit includes a transmission mechanism synchronizing with the optical unit in the first direction and a second operating member coupling to the image generation device by the transmission mechanism; wherein the second operating member surrounds the first operating member and makes the image generation device move in the second direction when rotating the second operating member.

A head-mounted electronic device includes a display displaying an image for a user to watch. The display includes a housing and the above display unit receiving in the housing.

Under the above technical solution, the user can adjust a diopter and a pupil distance, respectively. Moreover, when the second operating member is rotated, the first operating member does not need to be applied a force, and when the user applies the force to the first operating member, the user does not need to rotate the second operating member, thus adjusting the diopter and the pupil distance without interference. A structure of the first operating member surrounded by the second operating member is advantageous for reducing an area of the housing occupied by the two operating members, and thereby the whole design is relatively simple.

### BRIEF DESCRIPTION OF THE DRAWINGS

The following drawings are used to describe various embodiments of the present disclosure in detail in conjunction with the specific embodiments. It can be apprehended that, the elements illustrated in the drawings do not represent an actual size and proportions, the specific embodiments described herein are merely illustrated the present disclosure, and are not intended to limit the present disclosure.
FIG. 1 is a structural schematic view of a head-mounted display device provided in an exemplary embodiment of the present disclosure.
FIG. 2 is a cross-sectional view of a part of a display portion of the head-mounted display device of FIG. 1.
FIG. 3 is a top view of a display portion of the head-mounted display device of FIG. 1.
FIG. 4 is a structural schematic view of a display unit of the head-mounted display device of FIG. 1.
FIG. 5 is an exploded view of a part of the display unit of FIG. 1.
FIG. 6 is an exploded view of another part of the display unit of FIG. 1.
FIG. 7 is an exploded view of yet another part of the display unit of FIG. 1.

### DETAILED DESCRIPTION

In order to better understand the purposes, solutions, and advantages of the present disclosure, the technical solutions in the embodiments of the present disclosure are clearly and completely described below with reference to the accompanying drawings in the embodiments of the present disclosure. It can be apprehended that, the specific embodiments described herein are merely illustrated the present disclosure and are not intended to limit the present disclosure.

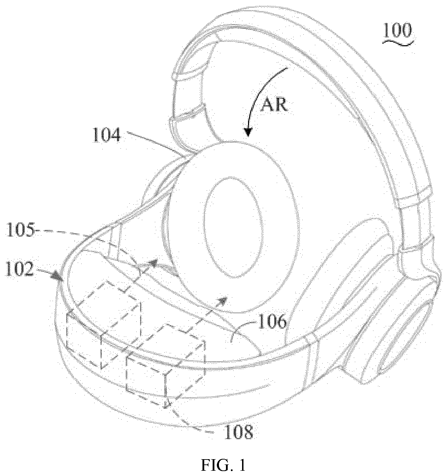

As illustrated in FIG. 1, a head-mounted display device 100 is provided by an embodiment of the present disclosure. The head-mounted display device 100 includes a display portion 102 displaying images for a user to watch, and earphones 104 enabling the user to hear a sound matched with the displayed image. In the embodiment, the earphones 104 are arranged on two opposite ends of the display portion 102, respectively. The earphones 104 are headphones, which are configured to provide superior listening experience for the user. Preferably, the earphones 104 are rotatable relative to the display portion 102. When the head-mounted display device 100 is not in use, the display portion 102 and the earphones 104 can be rotated to overlap each other, such as the earphones 104 rotates in a direction indicated by an arrow AR, thus reducing an accommodation space required for the entire head-mounted display device 100. However, it can be apprehended that, in other embodiments, the earphones 104 can also be in-ear phones, or just a headphone jack such as a 3.5 mm headphone jack providing for the user to connect a desired earphone. In the embodiment, the display portion 102 includes a housing 106 coupling to the earphones 104 and two display units 108 fixedly receiving in the housing 106. Each of the two display units 108 is configured to project an image beam 105 to a corresponding eye of the user, thus the user can watch the enlarged dotted lines and get a visual effect of watching a big screen.

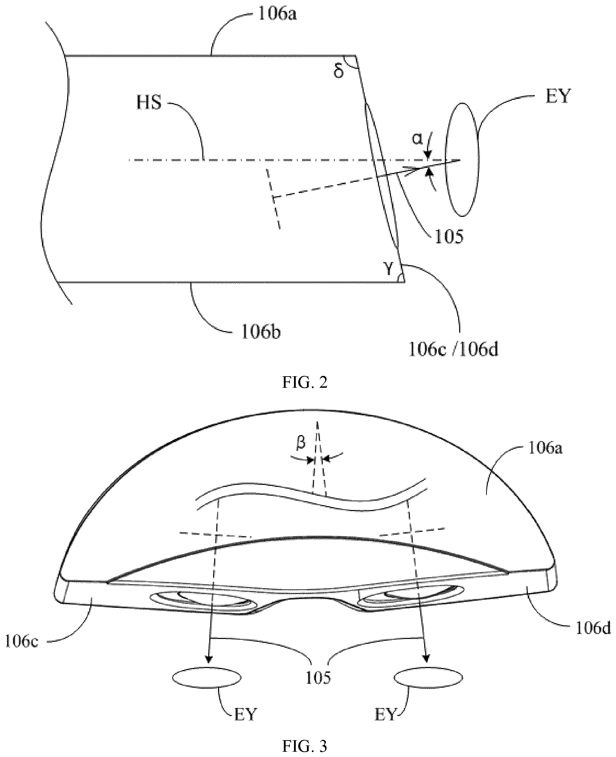

As illustrated in FIG.2 and FIG. 3, in the specification and claims herein, when the user's eyes labeled as EY are looking straight ahead at infinity, a plane formed by two parallel lines representing sights of the user's eyes is defined as a "horizontal sight plane" HS. One side of the horizontal sight plane HS adjacent to a chin of the user is defined as a "low side". Another side of the horizontal sight plane HS adjacent to a forehead of the user is defined as an "up side". In order to prevent the eyes of the user from feeling tired after wearing the head-mounted display device 100 to watch for a long time, each of the image beams 105 is emitted from the low side of the horizontal sight plane HS to the horizontal sight plane HS, a non-zero first angle α is formed between optical axes of the image beams 105 and the horizontal sight plane HS to enable projecting the image beams 105 into the corresponding eyes; the optical axes of the image beams 105 are distant from each other in a direction of the image beams 105 projected into the corresponding eyes, and a non-zero second angle β is formed between the two optical axes.

Since the eyes are easy to feel tired when the eyes is keeping looking straight ahead for a long time; in the above technical solution, when the user watches an image displayed on the display unit 108, the optical axes of the eyes are inclined downward to the first angle α relative to the horizontal sight plane HS, thus conforming to a comfortable viewing habit of eyes. Therefore, in the above technical solution, when the user wears the head-mounted display device 100 to watch for a long time, the user may feel untired. At the same time, the optical axes of the image beams 105 projected by the display unit 108 to the user's eyes are relatively "dispersed", that is, the optical axes are distant from each other in a direction of the optical axes of the image beams 105 projected into the corresponding eyes, and the non-zero second angle β is formed between the two optical axes, thus the dotted lines watched by the user in the direction opposite to the incident direction of the two optical axes may be easy to be focused and be coincided, and the user may easily watch a coincident image after wearing the head-mounted display device 100. Whether the user can watch the coincident image and whether the user can watch the image for a long time without being tired is important for the user experience. In summary, the above two angles are set to improve the comfortable sensation for user's wearing.

Preferably, 5°≤α≤15°, and 1°≤β≤18°. More preferably, 8°≤α≤12°, and 5°≤β≤16°.

In an alternative embodiment, the housing 106 includes an upper plate 106a, a lower plate 106b opposite to the upper plate 106a, and a front plate coupling the upper plate 106a and the lower plate 106b and facing towards the user's eyes. The front plate includes a left front plate 106c facing towards a left eye of the user and a right front plate 106d facing towards a right eye of the user. An angle formed between the left front plate 106c and the right front plate 106d equals to (180°-β). Therefore, during the assembly process, the two display units 108 abut against the left front plate 106c and the right front plate 106d respectively, and the second angle is the preset angle β, unchangeably.

In an alternative embodiment, angles γ are formed between the lower plate 106b and the left front plate 106c, and between the lower plate 106b and the right front plate 106d. The angle γ is equal or greater than (90°-α). Angles δ are formed between the upper plate 106a and the left front plate 106c, and between the upper plate 106a and the right front plate 106d. The angle δ is equal or greater than (90°+α), thus saving an accommodation space within the housing 106.

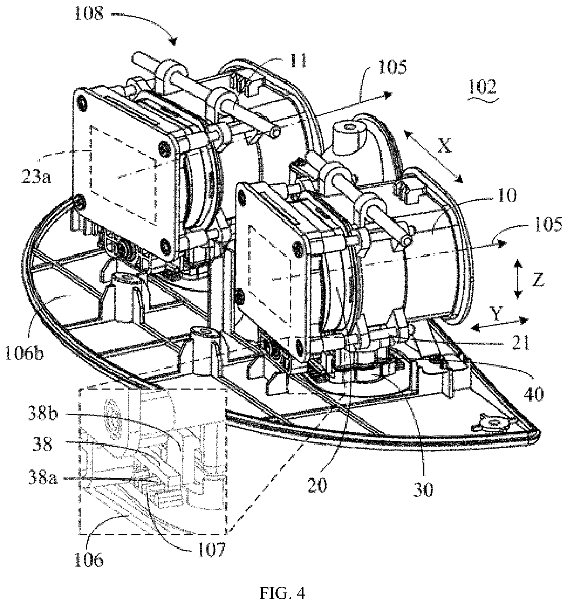

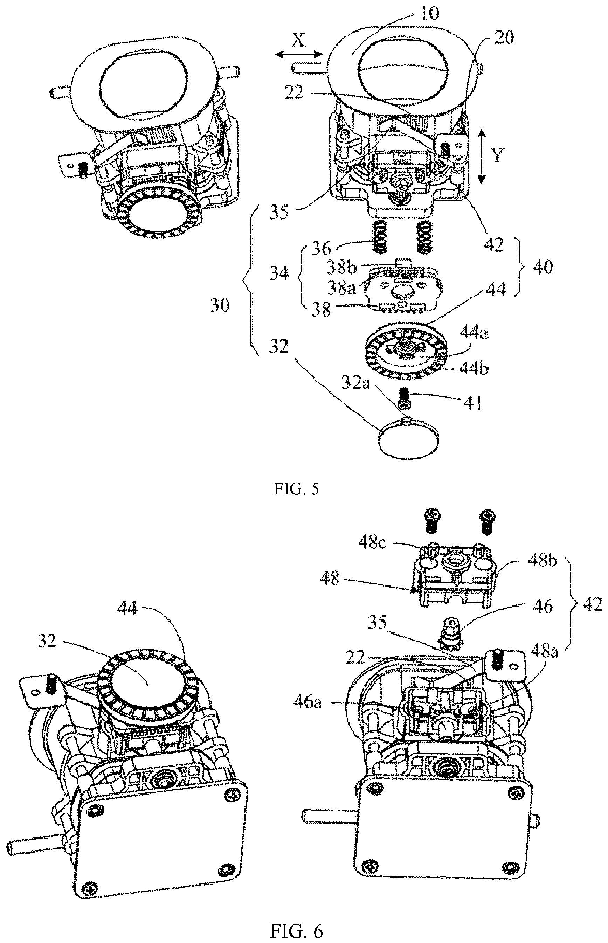

As illustrated in FIG. 4 and FIG. 5, an embodiment of the present disclosure provides a display unit 108. The display unit 108 includes an optical unit 10, an image generation device 20, a first adjusting unit 30, and a second adjusting unit 40. The optical unit 10 can move in a preset first direction X. The image generation device 20 couples to the optical unit 10 and can move in a preset second direction Y. The first adjustment unit 30 includes a first operating member 32 and a locking mechanism 34 synchronizing with the optical unit 10 in the first direction X. When the locking mechanism 34 is not subjected to an external force, the locking mechanism 34 is in a first state for locking a position of the optical unit 10. When the locking mechanism 34 is subjected to an external force through the first operating member 32, the locking mechanism 34 is in a second state capable of driving the optical unit 10 to move in the first direction X. The second adjusting unit 40 includes a transmission mechanism 42 synchronizing with the optical unit 10 in the first direction X and a second operating member 44 coupling to the image generation device 20 by the transmission mechanism 42. The second operating member 44 surrounds the first operating member 32 and makes the image generation device 20 move in the second direction Y when the second operating member 44 is rotated.

When an external force is applied to the first operating member 32, thus making the locking mechanism 34 in the second state, the locking mechanism 34 can be driven to move in the first direction under the external force, thus driving the optical unit 10 to move in the first direction, and thereby adjusting a distance between the two display units 108 to adapt the user's pupil distance. The second operating member 44 is rotated to make the optical unit 10 move in the second direction Y through the transmission mechanism 42, thus adjusting a distance (that is the diopter) between the image generation device 20 and the optical unit 10, and thereby adapting a degree of nearsightedness or farsightedness of different users. In addition, when the second operating member 44 is rotated by the user, there is no external force need to be applied to the first operating member 32, and the locking mechanism 34 is in the first state for locking a position of the optical unit 10, thus the pupil distance may not be adjusted in a process of adjusting the diopter. Similarly, when an external force is applied to the first operating member 32, there is no need to rotate the second operating member 44, thus the diopter may not be adjusted in a process of adjusting the pupil distance. Therefore, the adjustment of the pupil distance and the adjustment of the diopter do not interfere with each other.

In addition, since the second operating member 44 needs to be executed a rotating operation, a portion operated by the user should be far away from a rotating shaft in the middle portion of the second operating member 44 to facilitate the user's operation. Therefore, the middle portion of the second operating member 44 is a part that is not conducive to the user's operation. At this time, the first operating member 32 is located at a middle portion of the second operating member 44, that is, the structure of the first operating member 32 is configured to be surrounded by the second operating member 44, which is beneficial to reduce an area of the lower plate 106b occupied by the two operating members 32, 44, thus the whole design is relatively concise. At the same time, the two operating members 32, 44 are arranged in such a way that the two operating members 32, 44 need not be moved to two separate locations far away from each other when the user adjusts the diopter and the pupil distance, and it is convenient for the user to operate.

Specifically, as illustrated in FIG. 1 to FIG. 4, a plurality of lenses are arranged in the optical unit 10, and the optical unit 10 can move in the first direction X under a guidance of a first guide bar 11. The image generation device 20 may be an OLED display screen. An image beam 105 generated by the image generation device 20 is projected into the corresponding eye of the user in a preset direction under the guidance of the optical unit 10, thus allowing the user to watch an enlarged virtual image. The image generation device 20 can move in the second direction Y under the guidance of a second guide bar 21.

The locking mechanism 34 includes an elastic member 36 and a positioning member 38. The positioning member 38 is configured to couple to a coupling portion 107. The elastic member 36 is configured to apply an elastic force to the positioning member 38 to make the positioning member 38 couple to the coupling portion 107, thus making the locking mechanism 34 in the first state. The first operating member 32 transfers the external forces to the elastic member 36 by the positioning member 38 to decouple the positioning member 38 from the coupling portion 107, thus making the locking mechanism 34 in the second state. In the embodiment, the coupling portion 107 is arranged on an inner surface of the lower plate 106b. The coupling portion 107 is substantially in a wave shape. Correspondingly, the positioning member 38 also includes an undulating portion 38a correspondingly engaging with the coupling portion 107. In this embodiment, the elastic member 36 is a spring. The elastic member 36 is located above the positioning member 38, and is always in a compressed state to apply a downward elastic force to the positioning portion 38, such that when the coupling portion 107 and the positioning member 38 are engaged in a concave-convex engagement way, and when the positioning portion 38 is only subjected to the action of the elastic member 36, the positioning portion 38 cannot move in the first direction X.

More specifically, as illustrated in FIG. 4, the positioning member 38 includes two hooks 38b extending outward from two opposite sides of the positioning member 38, respectively. The two hooks 38b are slidably relative to the shell 48 of the transmission mechanism 42 (described in details below), and abuts against the shell 48 when the locking mechanism 30 is in the first state. Therefore, although the elastic member 36 applies a force to the positioning member 38 at this time, the positioning member 38 is restricted from continuing to slide downward under the action of the hooks 38b. However, when an external force is applied to the positioning member 38 by the first operating member 32, the positioning member 38 can slide upward (not shown) relative to the shell 48, thus allowing the coupling portion 107 to be decoupled from the positioning member 38. Similarly, the first operating member 32 also includes two latching members 32a similar to the two hooks 38b. The two latching members 32a are configured to abut against the second operating member 44 when the locking mechanism 30 is in the first state, thus preventing the positioning member 38 from continuing to slide downward. The first operating member 32 may slide upward under the external force to make the latching members 32a abut against the positioning member 38, thus decoupling the positioning member 38 from the coupling portion 107.

Preferably, a middle portion of an outer surface of the first operating member 32 recesses inwardly, thus it is convenient for the user to operate the first operating member 32 to drive the optical unit 10 to move in the first direction X.

It can be apprehended that, in other embodiments, the elastic member 36 may also be arranged below the positioning member 38 and in a stretched state. Furthermore, in the above embodiment, the positioning member 38 can move in a third direction Z substantially perpendicular to the first direction X or the second direction Y. However, it can be apprehended that, in other embodiments, under a principle similar to the above embodiment, the first operating member 32 can also be arranged on the upper plate 106a of the housing 106, or an outside surface of the housing 106 facing away from the user, or the like. That is, the positioning member 38 is not limited to slide in the third direction Z, for example, the positioning member 38 may be slide in the first direction X or the second direction Y.

As illustrated in FIG. 5 and FIG. 6, specifically, the second operating member 44 defines a groove 44a. The first operating member 32 receives in the groove 44a, and is surrounded by the second operating member 44. In addition, a portion of the second operating member 44 surrounding the first operating member 32 is substantially annular, and an outsider surface of the annular portion includes a plurality of flanges 44b extending in a radial direction of the second operating member 44. The first operating member 44 is substantially round in shape. The first operating member 32 is located in the groove 44a, and is surrounded by the second operating member 44, and the arrangement of the flanges 44b may help the user to rotate the second operating member 44.

The transmission mechanism connection 42 include at least one screw pole 46 configured to convert a rotary motion to a linear motion. The second operating member 44 couples to the at least one screw pole 46 and drives the at least one screw pole 46 to rotate under an external force. The second operating member 44 can fixedly couple to the screw pole 46 by a screw 41 to make both of the second operating member 44 and the screw pole 46 rotate synchronously. Since the screw pole 46 couples to the image generation device 10, the second operating member 44 can be rotated to adjust a distance between the image generation device 10 and the optical unit 20, thus adapting a degree of nearsightedness or farsightedness of different users. In the embodiment, since the second operating member 44 is arranged at a bottom of the housing 106 and the image generation device 10 can move in the second direction Y, the at least one screw pole 46 may include two screw poles 46, 46a forming an angle in this embodiment. That is, a rotation of the second operating member 44 is transferred to the screw 46a by the screw pole 46, and a thread defined on the screw pole 46a couples to a thread of the optical unit 20 to convert the rotary motion to the linear motion. However, it can be apprehended that, in other embodiments, the second operating member 44 can be arranged at other locations, such as a front side surface of the housing 106 far away from the user, and the second operating member 44 can be adjusted with a single screw pole.

More specifically, the transmission mechanism 42 also includes a shell 48. The at least one screw pole 46 receives in the shell 48. The shell 48 is configured to fix the at least one screw pole 46 at a position, thus making it too difficult to adjust the position of the at least one screw pole 46. Preferably, the shell 48 includes a first shell 48a and a second shell 48b opposite to the first shell 48a. The second shell 48b defines a blind hole 48c. A part of the elastic member 36 receives in the blind hole 48c; and the other part of the elastic member 36 extended out of the blind hole 48c abuts against the positioning member 38. The blind hole 48c is configured to fix the elastic member 36 at a preset position.

As illustrated in FIG. 5, the first adjusting unit 30 further includes an elastic piece 35 coupling to the lower plate 106b of the housing 106. A surface of the optical unit 10 also includes a friction portion 22 with a plurality of recesses. During the movement of the optical unit 20 in the first direction X, the elastic piece 35 may abut against the friction portion 22 to generate a vibration and/or a sound, thus allowing the user to perceive the movement of the optical unit 20, and at the same time, the recesses of the friction portion 22 abutting against the elastic piece 35 also serves as a function of fixing position.

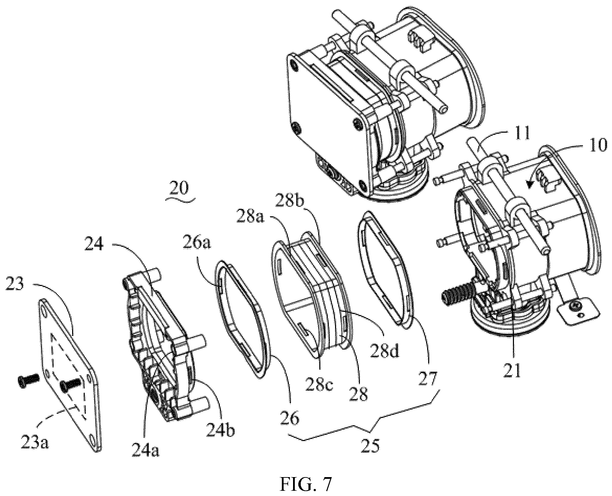

As illustrated in FIG. 7, specifically, the image generation device 20 includes a display screen 23, a bracket 24, and an elastic sealing tube 25. The display screen 23 includes a main body 23a for displaying an image. The display screen 23 can be fixed to one side of the bracket 24 facing away from the optical unit 20 by a screw, and one side of the display screen 23 for displaying the image faces towards the lens unit 10. The bracket 24 movably couples to the optical unit 20, for example, a plurality of fixing holes 24a are defined on the bracket 24, Which are configured to engage with the second guiding rod 21, thus the bracket 24 movably couples to the optical unit 20 in a preset direction (that is the second direction Y) of the second guiding rod 21. One end of the elastic sealing tube 25 is hermetically fixed to the bracket 24, and the opposite end of the elastic sealing tube 25 is hermetically fixed to the lens unit 10. The elastic sealing tube 25 can extend or contract in a direction (that is the second direction Y) in which the bracket 24 moves, to make the main body 23a of the display screen 23 for displaying the image seal in a space formed by the holder 24, the optical unit 20, and the elastic sealing tube 25. Therefore, when the diopter, that is a distance between the display screen 23 and the lens unit 10, is adjusted by the user within an allowable range, the elastic sealing tube 25 can be extended or contracted in the second direction Y, thus the adjustment will be not limited by the elastic sealing tube 25. At the same time, the main body 23a and the lens unit 10 are sealed therebetween due to an arrangement of the elastic sealing tube 25, thus preventing external impurities from entering therebetween to affect an effect of the image projected into the user's eyes. It is extremely important in the field of near-eye display where there is a need for high display quality. Therefore, the elastic sealing tube 25 can effectively prevent the external impurities from affecting a display quality, and at the same time, it does not restrict the adjustment of the diopter.

It should be noted that, in other embodiments, the above circuit board of the display screen 23 can also be manufactured to be relatively small, and the bracket 24 further includes a sealing plate (not shown) for completely accommodating the display screen 23 in the bracket 24.

Specifically, the elastic sealing tube 25 includes a first fixing member 26, a second fixing member 27, and an elastic pipe member 28. The first fixing member 26 is substantially in an annular shape or a racetrack-like shape. The first fixing member 26 can be fixedly coupled to one end 28a of the elastic pipe member 28 by means of adhesive or the like, which can be configured to couple to the bracket 24. The connecting way of the bracket 24 may be as follows. An edge of the first fixing member 26 defines a plurality of through holes 26a, and at the same time, the bracket 24 defines a plurality of protrusions 24b correspondingly, thus a connection between the first fixing member 26 and the bracket 24 may be achieved by engaging the through holes 26a with the protrusions 24a. Preferably, the elastic pipe member 28 defines a plurality of through holes 28c corresponding to the through holes 26a, thus the protrusions 24b of the bracket 24 are simultaneously inserted into the through holes 26a and 28c, thus further preventing the first fixing member 26 from detaching from the elastic pipe member 28. Of course, in other embodiments, the first fixing member 26 and the one end 28a of the elastic pipe member 28 do not need to be bonded, and are directly fixed to the bracket 24 by the above-mentioned mean of fixation. The second fixing member 27 is fixed to the lens unit 10 and the other end 28b of the elastic pipe member 28 in the same way as described above, which will not be described in further details. The elastic pipe member 28 may be made from a stretchable material, such as rubber, which is preferable to be low in optical transparency. A surface of the elastic pipe member 28 preferably defines a plurality of drapes 28d perpendicular to the extending/contracting direction of the elastic pipe member 28, which facilitate the elastic pipe member 28 to contract or stretch.

It should be noted that, in the above embodiment, since the elastic pipe member 28 is soft, the two fixing members 26, 28, which are made from plastic and have hard character, couple to the bracket 24 and the lens unit 10 by buckling, thus improving the reliability of connection, and facilitating the assembly process. For example, the whole elastic sealing tube 25 is molded to an integral piece, and is buckled to the bracket 24 and the lens unit 10 during the assembly process. However, it should be understood that, in other embodiments, the connection of the elastic sealing tube 25 may be implemented by other means. For example, the two ends 28a, 28b of the elastic pipe member 28 are directly fixed to the bracket 24 and the lens unit 10 by means of adhesive. In addition, in other embodiments, one end of the elastic pipe member 28 may be coupled to the bracket 24 and the lens unit 10 by the fixing member 26 or 28, and the other end of the elastic pipe member 28 may couple to the bracket 24 and the lens unit 10 by other means, such as the bonding way.

It must be noted that, the terms "first", "second", "third", and "fourth" and the like used in the present disclosure are used to distinguish different objects, and are not intended to describe a specific order, quantity, or importance. Similarly, the terms "a", "an", "the", or the like do not indicate a quantity limitation, but are merely used to indicate that there is at least one. The terms "comprising" or "comprises" or the like means that the element or object recited before the term is intended to contain the element or the object and its equivalent recited after the term, and does not exclude other elements or objects. "Couple" or coupled terms are not limited to physical or mechanical connections, but may include electrical connections, whether it was a direct connection or an indirect connection. "Upper", "lower", "left", "right", and the like are only used to indicate the relative positional relationship, and when the absolute position of the object to be described is changed, the relative positional relationship may also change accordingly.

The foregoing description merely depicts some exemplary embodiments of the disclosure, which are not intended to limit the disclosure. Any modifications, equivalent substitutions, and improvements made without departing from the spirits and principles of the disclosure shall all be encompassed within the protection of the disclosure.

## Claims

1. A display unit, comprising:
an optical unit movable in a preset first direction;
an image generation device coupling to the optical unit and movable in a preset second direction;
a first adjusting unit comprising a first operating member and a locking mechanism synchronizing with the optical unit in the first direction; wherein when the locking mechanism is not subjected to an external force, the locking mechanism is in a first state for locking a position of the optical unit; and when the locking mechanism is subjected to the external force by the first operating member, the locking mechanism is in a second state capable of driving the optical unit to move in the first direction; and
a second adjusting unit, comprising a transmission mechanism synchronizing with the optical unit in the first direction and a second operating member coupling to the image generation device by the transmission mechanism; wherein the second operating member surrounds the first operating member and makes the image generation device move in the second direction when rotating the second operating member.

2. The display unit of claim 1, wherein the locking mechanism comprises an elastic member and a positioning member coupling to a coupling portion; the elastic member is configured to apply an elastic force to the positioning member to couple to the coupling portion, thus making the locking mechanism in the first state; and the first operating member transfers the external force to the elastic member by the positioning member to decouple the positioning member from the coupling portion, thus further making the locking mechanism in the second state.

3. The display unit of claim 2, wherein the positioning member is movable in a third direction substantially perpendicular to the first direction or the second direction; and the elastic member is compressed in the first state.

4. The display unit of claim 2, wherein a middle portion of the second operating member defines a groove; and the first operating member receives in the groove and surrounded by the second operating member.

5. The display unit of claim 4, wherein the first operating member is substantially in a round shape; a middle portion of an outside surface of the first operating member recesses inwardly; a portion of the second operating member surrounding the first operating member is substantially in an annular shape; and an outside surface of the annular portion comprises a plurality of flanges extending in a radial direction.

6. The display unit of claim 4, wherein the second operating member defines a though hole located at a bottom of the groove; the first operating member defines a latching member extending through the though hole; when the locking mechanism is in the first state, the latching member abuts against the second operating member; and when the locking mechanism is in the second state, the latching member abuts against the positioning member.

7. The display unit of claim 2, wherein the first adjusting unit further comprises an elastic piece fixing to the coupling portion; a surface of the optical unit defines a friction portion with a plurality of recesses; and the elastic piece abuts against the friction portion during a movement of the optical unit in the first direction.

8. The display unit of claim 1, wherein the transmission mechanism connection comprises at least one screw pole configured to convert a rotary motion to a linear motion; and the second operating member couples to the at least one screw pole and drives the at least one screw pole to rotate under the external force.

9. The display unit of claim 8, wherein the transmission mechanism further comprises a shell; and the at least one screw pole receives in the shell.

10. The display unit of claim 9, wherein each of two opposite sides of the positioning member arranges a hook; the two hooks are slidably relative to the shell of the transmission mechanism, and abut against the shell when the locking mechanism is in the first state.

11. The display unit of claim 9, wherein the shell defines a blind hole; a part of the elastic member receives in the blind hole; and the other part of the elastic member extended out of the blind hole abuts against the positioning member.

12. The display unit of claim 1, wherein the image generation device comprises a bracket movably coupling to the optical unit, a display screen fixing to a side of the bracket facing away the optical unit, and an elastic sealing tube retractable in a moving direction of the bracket, two opposite ends of the elastic sealing tube hermetically coupling to the bracket and the optical unit respectively to seal a main body of the display screen configured to display an image in a space formed by the bracket, the optical unit, and the elastic sealing tube.

13. A head-mounted display device, comprising: a display portion displaying an image for a user to watch, the display portion comprises a housing and two display units of claim 1 receiving in the housing; and each of the display units is configured to project an image beam to the corresponding eye of a user, to allow the user to watch a virtual image.

14. The head-mounted display device of claim 13, wherein the head-mounted display device further comprises earphones for the user to hear a sound; and the earphones are arranged on two opposite ends of the display portion, respectively.

15. The head-mounted display device of claim 14, wherein the earphones are headphones; and the earphones are rotatable relative to the display portion.

16. The head-mounted display device of claim 13, wherein each of the image beams is emitted from a low side of a horizontal sight plane to the horizontal sight plane, and a non-zero first angle α is formed between optical axes of the image beams and the horizontal sight plane to project the image beams to the corresponding eyes.

17. The head-mounted display device of claim 16, wherein 5°≤α≤15°.

18. The head-mounted display device of claim 13, wherein optical axes of the image beams are distant from each other in a direction of the image beams projected to the corresponding eyes; and a non-zero second angle β is formed between the two optical axes.

19. The head-mounted display device of claim 18, wherein 1°<β<18°.
